# EUROPEAN PATENT APPLICATION

(11) **EP 4 844 582 A1**
(43) Date of publication of application: **25.11.2026**
(21) Application number: 25177370.1
(22) Date of filing: 19.05.2025
(51) Int. Cl.: G06F 11/07, G06N 20/00, G06F 11/34

(54) **COMPUTER-IMPLEMENTED METHOD FOR GENERATING AT LEAST ONE INSTRUCTION**

(71) Applicant: Siemens Aktiengesellschaft, 80333 München (DE)
(72) Inventor: Feldmeyer, Alfred, 83022 Rosenheim (DE); Mittermeier, Ludwig Andreas, 81541 München (DE)
(74) Representative: Siemens Patent Attorneys

(57) **Abstract**

The invention relates to a computer-implemented method for generating at least one instruction, wherein the at least one instruction is an instruction to handle at least one incident, wherein the at least one incident refers to a technical system with at least one computing machine, comprising the steps: a. Providing input data (S1); wherein the input data comprises at least one current system state of the at least one computing machine of the technical system; wherein the at least one current system state describes at least one current configuration of the at least one computing machine of the technical system; wherein the input data comprises the at least one incident; b. Transferring the input data into the at least one instruction using a large language model based on the input data (S2); and c. Providing the at least one instruction (S3). Further, the invention relates to a corresponding computer program product and data processing unit.

## Description

### 1. Technical field

The present invention relates to a computer-implemented method for generating at least one instruction. Further, the invention relates to a corresponding computer program product and data processing unit.

### 2. Prior art

Distributed computing environments have become increasingly prevalent in modern technological landscapes. Thereby, a distributed computing environment refers to a technical system comprising multiple interconnected nodes (i.e. virtual or physical computing machines), which most often work together on a single task. They can comprise services, such as database, cache and/or resources. Exemplary resources are disk space, memory and Central Processing Unit (CPU). They usually share the computational resources and data across a network. Such environments offer advantages in terms of scalability, reliability, and performance.

However, they also present unique challenges in troubleshooting due to their complex nature. As distributed systems grow in scale and complexity, the task of identifying and resolving issues becomes more demanding. System administrators and operators often face difficulties in quickly diagnosing problems across multiple nodes, each potentially running different services or applications. This can lead to extended downtime and reduced system reliability.

Several approaches about self-healing systems are known from the prior art. Known approaches often involve time-consuming processes of e.g. log analysis, configuration checks, and trial-and-error troubleshooting. The term troubleshooting can be understood in terms of error handling, fixing incidents and problem resolution. However, known approaches solely address troubleshooting of software systems. They neglect the configuration of the environment or dedicated services. Moreover, they are not sufficiently responsive in dynamic environments where rapid problem resolution is crucial.

It is therefore an objective of the invention to provide a computer-implemented method for generating at least one instruction, which is more efficient and reliable.

### 3. Summary of the invention

This problem is according to one aspect of the invention solved by a computer-implemented method for generating at least one instruction, wherein the at least one instruction is an instruction to handle at least one incident, wherein the at least one incident refers to a technical system with at least one computing machine, comprising the steps:
a. Providing input data; wherein
   the input data comprises at least one current system state of the at least one computing machine of the technical system; wherein
   the at least one current system state describes at least one current configuration of the at least one computing machine of the technical system; wherein
   the input data comprises the at least one incident;
c. Transferring the input data into the at least one instruction using a large language model based on the input data; and
d. Providing the at least one instruction.

Accordingly, the invention is directed to the computer-implemented method for generating the instruction. The instruction can be understood as recommendation, information or script. The instruction refers to handling the incident. Handling the incident can also be understood as the aforementioned troubleshooting. Exemplary incidents are errors, warnings, failures, technical issues and problems, which might occur, be monitored and/or detected in the technical system. Technical issues are for example the exhaustion of resources, such as disk space or computing power. Accordingly, for example, handling an error can be equally referred to as error handling. The technical system comprises one or more computing machines. The computing machines can be technical components, such as Software components or Hardware components. The computing machines can be interconnected via a network.

The computer-implemented method and hence, generation of the instruction, can be triggered on a continuous basis, such as in regular intervals. Alternatively, the method can be triggered on demand or depending on a user request, event or the incident.

In the first method step, the input data is provided as input for the computer-implemented method. The input data comprises the system state of the computing machine of the technical system. The term system state can be equally referred to as state of the system. The state of the system can change over time. Preferably, a plurality of system states over a pre-determined time period are provided, wherein each system state of the plurality of system states has a time stamp.

Thereby, the system state describes the current configuration of the computing machine of the technical system. The current configuration can comprise at least one configuration parameter. Moreover, the input data comprises the incident, which has to be handled. The input data can be received and/or transmitted via one or more interfaces of a technical unit, wherein the technical unit can be designed as any computing unit.

In the next method step, the instruction is generated. Therefore, the input data is transferred or translated into the instruction by means of a large language model (LLM).

The large language model uses the input data as input. The field of artificial intelligence, particularly machine learning, has shown promise in various domains of computer science. The large language models, trained on vast amounts of data, have demonstrated capabilities in language processing and generation tasks.

The large language models are, in other words, capable to translate text. They are able to learn from a sufficiently large dataset with text to generate the instructions, with the context of the system state or the state of a particular node of the system. The context for the LLM is the system state or the state of a node as input data.

In the last step, the instruction is provided as output.

The advantage of the present invention is that the instruction is determined in an efficient and reliable manner for the technical system. The technical system can be healed on the basis of the instruction. According to which the technical system can be understood as self-healing system. Contrary to prior art approaches, the configuration of the technical system is considered and incorporated in the generation of the instruction. The generation of the instruction is responsive in dynamic environments where rapid problem resolution is crucial.

In an aspect the input data is included in at least one log file. Accordingly, the input data can be stored in log files or a file structure. The input data can be extended with additional data, such as application logs etc.

In another aspect the input data is stored in a volatile or a non-volatile storage unit. Accordingly, the input data is stored in a storage unit in a reliable manner, hence preventing data loss. Additionally, any output data, such as the incident and/or instruction can be stored in the storage unit. For example, the system states, associated adaptations and/or associated system changes can be stored and tracked in an efficient and reliable manner. The storage unit can be flexibly selected, including e.g. database and cloud.

In another aspect the input data and/or the at least one instruction is transmitted via at least one interface. Accordingly, the data can be transmitted via interfaces between computing units. The interfaces have proven to be advantageous in view of an efficient and reliable data exchange or transfer.

In another aspect the technical system is a distributed system with a plurality of interconnected computing machines. Accordingly, the technical system is designed as the aforementioned distributed system. The computing machines can interact with each other over a network.

In another aspect the computer-implemented method further comprises
- Outputting the at least one instruction and/or any other related data;
- Storing the at least one instruction and/or any other related data;
- Displaying the at least one instruction and/or any other related data; and/or
- Transmitting the at least one instruction and/or any other related data, preferably to a user via a user interface or computing unit, even more preferably for analyzing the at least one instruction and/or handling the at least one incident based on the at least one instruction.

Accordingly, the input data, data of intermediate method steps and/or resulting output data can be further handled. The output data is in particular the instruction. One or more actions can be performed. The action can be equally referred to as measure.

These actions can be performed by one or more technical units, such as computing units or robot units. The actions can be performed gradually or simultaneously. Actions include e.g. storing and processing steps. The advantage is that appropriate actions can be performed in a timely manner.

For example, the instruction can be immediately outputted and/or displayed to a user by means of a display unit. The instruction can be extended with further information, such as the system state and/or incident etc. The user can perform an evaluation, review or additional check based on the instruction and/or incident to confirm or reject the instruction. The user can also extend or adapt the instruction. In other words, the user performs an analysis. This analysis process may involve analyzing the proposed changes and assessing their potential impact on the technical system. Such an additional check has proven to be advantageous since the check improves the reliability and correctness of the instruction and handling measures. The user can be an operator or expert of the technical system. The incident can be handled by the user.

In another aspect the computer-implemented method further comprises
- analyzing the at least one instruction;
- handling the at least one incident based on the at least one instruction; and/or
- receiving feedback regarding the at least one instruction from a computing unit or from a user via a user interface, wherein
the feedback preferably regards the success or failure of the at least one instruction in handling the at least one incident.

Accordingly, the analysis of the instruction and/or handling of the incident can be performed by the user or alternatively automatically by any computing unit. The computing unit can utilize artificial intelligence. The user can send feedback to the computing unit and the computing unit can receive and/or handle the feedback.

In some cases, this feedback may be collected through a user interface or computing unit. This feedback has been proven to advantageous to improve future instruction generation and incident handling processes.

In another aspect the handling comprises
- resolving the at least one incident; wherein
   the resolving comprises preferably adapting the at least one current configuration of the at least one computing machine of the technical system; and
- providing the at least one adapted configuration.

Accordingly, the incident is handled by resolving the incident. The handling can also be understood as executing the instruction. Hence, in other words, the incident is fixed or healed. The current configuration is adapted or updated. The current configuration results in an adapted configuration by the adaptation or update. The adaptation or update of the current configuration can also lead to an adaptation or change of the system state. For example, the configuration parameter or configuration, which is related to the incident, can be adapted. The adapted configuration can be applied on the technical system. The technical system is healed and can be equally referred to as self-healing technical system.

Additionally or alternatively, the handling can comprise modifying database parameters, adjusting network settings and/or or updating service configurations.

If an instruction successfully resolves an incident, the technical system may add the instruction and the corresponding adapted configuration to the storage unit. In some cases, this may involve storing the instruction along with metadata about the incident and the system state before and after the handling.

After handling, the system may monitor the results to determine if the incident has been resolved. In some cases, this may involve checking system logs, performance metrics and/or service availability to confirm the effectiveness of the instruction and/or handling.

The process of generating, analyzing (or validating), and executing instructions may be iterative. In some cases, if an initial instruction does not fully resolve an incident, one or more additional instructions will be generated or alternative approaches will be suggested. This additional generation can be based on the feedback received and/or the updated system state.

By maintaining a record of successful fixes and their outcomes, the system may build a knowledge base for addressing similar incidents in the future. In some cases, this repository of fix scripts and adapted configurations may serve as valuable training data for further refining the large language model's ability to generate effective solutions.

A further aspect of the invention is a computer program product directly loadable into an internal memory of a computer, comprising software code portions for performing the steps according to any one of the preceding claims when said computer program product is running on a computer.

A further aspect of the invention is a data processing unit for performing the aforementioned computer-implemented method.

The data processing unit may be realized as any device, or any means, for computing, in particular for executing a software, an app, or an algorithm. For example, the data processing unit may comprise a central processing unit (CPU) and a memory operatively connected to the CPU. The data processing unit may also comprise an array of CPUs, an array of graphical processing units (GPUs), at least one application-specific integrated circuit (ASIC), at least one field-programmable gate array, or any combination of the foregoing. The data processing unit may comprise at least one module which in turn may comprise software and/or hardware. Some, or even all, modules of the technical system may be implemented by a cloud computing platform.

### 4. Short description of the drawings

In the following detailed description, presently preferred embodiments of the invention are further described with reference to the following figure:
Fig. 1 illustrates a flowchart of the computer-implemented method for generating the at least one instruction according to the invention with the method steps S1 to S3.
Fig. 2 illustrates a data storage unit according to an embodiment.

### 5. Detailed description of preferred embodiments

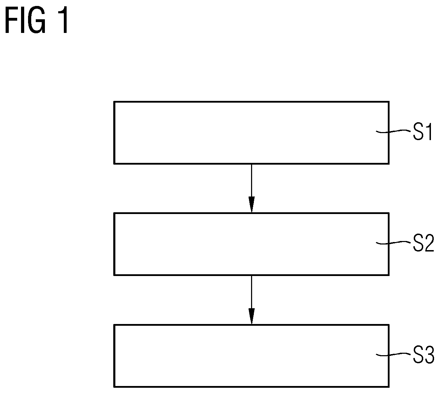

Figure 1 illustrates a flowchart of the computer-implemented method for generating the at least one instruction. The at least one instruction is an instruction to handle at least one incident. The at least one incident refers to the technical system with the at least one computing machine. In the first method step, the input data is provided as input S1. The input data comprises the at least one system state of the at least one computing machine of the technical system. The at least one system state describes the current configuration of the at least one computing machine of the technical system. The input data comprises the at least one incident. In the second method step, the input data is transferred into the at least one instruction using the large language model based on the input data S2. In the last method step, the at least one instruction is provided as output of the computer-implemented method S3.

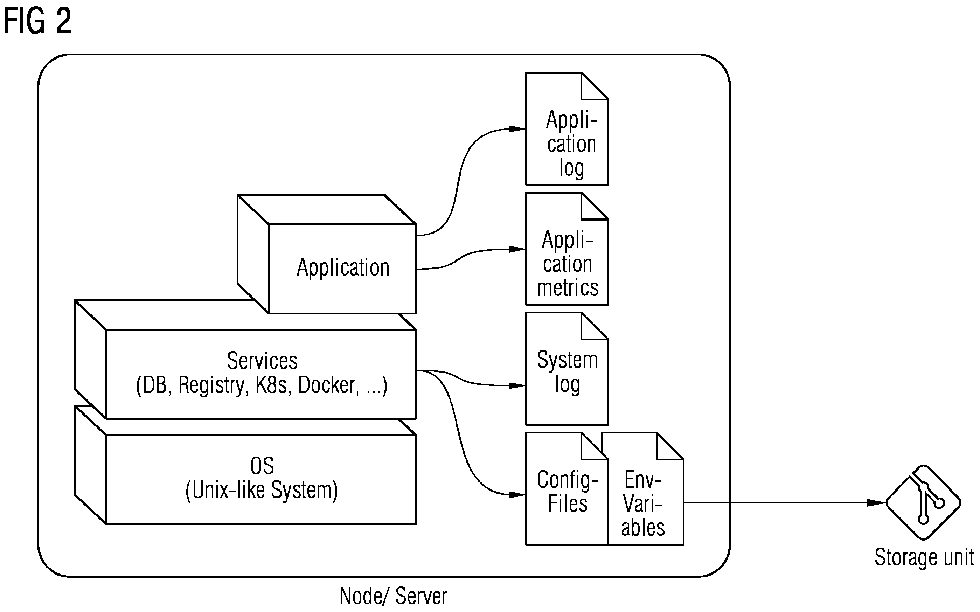

Figure 2 illustrates a data storage unit. The data storage unit comprises the system states. The data storage unit can comprise any additional data, such as input data, and hence the incidents. The data storage unit can be equally referred to as data or state repository. According to an embodiment, the system state will be updated every time, if the configuration has been adapted, which can be after a deployment or a user's log-off. It might be required to wait a few minutes after an update, in order to let the configuration adaptation take effect and to get the critical information from the log files in the data storage unit. The data storage can be automated e.g. by means of a bash script.

As an example, imagine an incident is actively present. A monitoring system like Grafana or Prometheus has reported an outage. Due to the Monitoring system the affected node is known. The state files of the affected node can be gathered and set as context information (system prompt) for the LLM prompt, which instructs the LLM to fix the issue, given in the log-files. If the LLM has learned similar issues in the past by using the dataset in the state repository, it can generate the instruction, like a fix script. The generation is considered to be validated once the syntax is correct - which could be a shell script. If the generated fix script contains variables, which are not in the given system prompt, a second/generic LLM can try to extract them from the log and config files of the affected node. This loop happens preferably once.

At the end the operator can be informed (by mail or messenger) about a possible fix for the current outage. If the fix could restore the productive state/fix the issue, it will be added to the state repository.

### Large language modelling

The large language model (LLM) is utilized in generating the instructions to handle the incidents in the technical system. According to an embodiment, the LLM can be trained on a dataset comprising historical system states and corresponding instructions.

The training process for the LLM may involve operators labeling system states. In some cases, if a configuration change does not respond to an operational issue, the operator will label the state as "no operation required". Alternatively, if the operator executes instructions or alters the configuration to address an issue, the operator will provide a corresponding instruction for the system state.

By learning from this labeled dataset, the LLM may develop the capability to translate between system states and appropriate instructions. In some cases, the LLM may analyze the current system state, including configuration files and error logs, to generate a suitable instruction for addressing the incident at hand.

The LLM may output the generated instructions in a specific format, such as shell scripts for Unix-like systems. In some cases, the generated instructions may be validated for correct syntax before being presented to the operator.

If the initially generated instruction comprises variables not present in the given system context, a second LLM may be employed. This secondary LLM may analyze the log files and configuration data of the affected node to extract the required variables. In some cases, this extraction process may occur only once per incident to avoid unnecessary iterations.

The LLM-based approach may allow for the preservation and application of operational knowledge within the project. Even as experienced team members depart, the remaining staff may be supported by the LLM's ability to translate configuration issues and error messages into actionable instructions.

In some cases, the LLM may be fine-tuned or updated over time as new incidents are encountered and resolved. This ongoing learning process may help the system adapt to evolving infrastructure configurations and emerging types of incidents.

## Claims

1. Computer-implemented method for generating at least one instruction, wherein
the at least one instruction is an instruction to handle at least one incident, wherein
the at least one incident refers to a technical system with at least one computing machine, comprising the steps:
a. Providing input data (S1); wherein
the input data comprises at least one current system state of the at least one computing machine of the technical system; wherein
the at least one current system state describes at least one current configuration of the at least one computing machine of the technical system; wherein
the input data comprises the at least one incident;
b. Transferring the input data into the at least one instruction using a large language model based on the input data (S2); and
c. Providing the at least one instruction (S3).

2. Computer-implemented method according to claim 1, wherein the input data is included in at least one log file.

3. Computer-implemented method according to claim 1 or claim 2, wherein the input data is stored in a volatile or a non-volatile storage unit.

4. Computer-implemented method according to any of the preceding claims, wherein the input data and/or the at least one instruction is transmitted via at least one interface.

5. Computer-implemented method according to any of the preceding claims, wherein the technical system is a distributed system with a plurality of interconnected computing machines.

6. Computer-implemented method according to any of the preceding claims, further comprising
- Outputting the at least one instruction and/or any other related data;
- Storing the at least one instruction and/or any other related data;
- Displaying the at least one instruction and/or any other related data; and/or
- Transmitting the at least one instruction and/or any other related data, preferably to a user via at least one user interface or computing unit, even more preferably for analyzing the at least one instruction and/or handling the at least one incident based on the at least one instruction.

7. Computer-implemented method according to any of the preceding claims, further comprising
- analyzing the at least one instruction;
- handling the at least one incident based on the at least one instruction; and/or
- receiving feedback regarding the at least one instruction from a computing unit or from a user via a user interface, wherein
the feedback preferably regards the success or failure of the at least one instruction in handling the at least one incident.

8. Computer-implemented method according to claim 7, wherein the handling comprises
- resolving the at least one incident; wherein
the resolving comprises preferably adapting the at least one current configuration of the at least one computing machine of the technical system; and
- providing the at least one adapted configuration.

9. A computer program product directly loadable into an internal memory of a computer, comprising software code portions for performing the steps according to any one of the preceding claims when said computer program product is running on a computer.

10. Data processing unit for performing the method according to any one of claims 1 - 8.
